# EUROPEAN PATENT SPECIFICATION

(11) **EP 2 431 396 B1**
(45) Date of publication and mention of the grant of the patent: **27.07.2016**
(21) Application number: 11180027.2
(22) Date of filing: 05.09.2011
(51) Int. Cl.: C08F 210/02, C08F 218/08, C08L 31/04, D04H 1/64

(54) **Vinyl acetate based alkaline resistant scrim binder**
Vinylacetatbasierte alkalinbeständige Gitterstoffbindemittel
Liant de canevas résistant aux bases de type acétate de vinyle

(30) Priority: 15.06.2011 EP 11170025; 15.09.2010 EP 10176859
(43) Date of publication of application: 21.03.2012
(73) Proprietor: Celanese Sales Germany GmbH, 65843 Sulzbach (DE)
(72) Inventor: McLennan, Alistair, 61462 Königstein (DE); Bavaj, Paolo, 60320 Frankfurt am Main (DE); Van Straeten, Rian, 6161 BL Geleen (NL); Laborda, Steve, 65719 Hofheim (DE); Zeimentz, Peter M., 50667 Köln (DE); Van Boxtel, Hendrikus C.M., 60438 Frankfurt am Main (DE)
(74) Representative: Lahrtz, Fritz

(56) References cited:
- DE-A1- 2 512 589
- US-A- 4 481 250

## Description

The present invention relates to a fibrous product comprising a fibrous substrate as well as the aqueous formulation or the binder system and use of the aqueous formulation or the binder system for coating synthetic or mineral fibres, for increasing the alkali resistance of synthetic or mineral fibres and use in a process for the manufacturing of an alkali resistant glass fibre scrim.

The world wide "green" movement and trend toward eco-friendly buildings are two of the primary drivers for increased utilization in External Insulation Finishing Systems (EIFS) for buildings. Concerns for climate protection are also spurring many governments to fund more environmentally-friendly building projects.
There are many market drivers for the increased utilization of EIFS, External Insulation Finishing Systems, for buildings. As the market for EIFS grows, so will the need for binders for the glass fibre scrims. Traditionally, more ecologically-friendly waterborne binders have been utilized for the scrims as opposed to solvent-borne systems. Both acrylic and styrene-butadiene (SBR) binders have been used in the past, though the former is thought to be an expensive choice while the latter has poor performance with regards to alkali resistance.

Another market driver is the rising cost of energy prices. EIFS enable the building to stay warmer in winter by retaining heat and cooler in summer by repelling it, thus lowering the major energy costs associated with buildings. It is easy to understand how EIFS achieve energy-conservation when one looks at their typical construction. EIFS usually consist of an insulation material affixed to the exterior wall and reinforced with a glass fibre scrim. The scrim provides the necessary reinforcement to give stability to the system. The scrim must also be compatible with the protective plaster layer, a typically alkaline environment. In addition, it must be easy to work with during the application phase, in terms of necessary stiffness, but with an easy to use hand feel.

The currently commercially available SBR-binder systems exhibit poor performance for alkali resistance. However, there is a high demand for glass fibre scrims which are used in EIFS and which demonstrate an alkali resistance and meet the new European ETAG 004 norm. This norm describes a test where impregnated scrims are placed in an alkaline solution for 28 days. The specimens are tested for tensile strength before and after alkaline exposure and must achieve tensile strength values of at least 200 N/cm after alkaline testing. Additionally, after aging the tensile strength should not be less than 50% of the sample not aged in the alkaline media. The reason for this requirement of alkaline resistance is the strong alkaline conditions in the final application where the scrim will be put into cement. Generally, standard glass is used and the alkaline attack would lead to a reduction in tensile strength of the glass. The binder coats the glass strands and protects them from the alkali attack thus maintaining the reinforcing strength of the glass.

Further, there is a demand for a binder system which provides better cohesion of weft and warp threads while imparting more rigidity to the mesh thus making the handling easier. Thus, the optimum balance should be soft enough to be rolled while still showing enough stiffness during lay up.

US 10/0167609 A1 discloses the use of aqueous copolymers as binders for bonding and coating fibrous structures such as woven fabrics, non-woven and waddings of textile fibres or textile yarns. The copolymers used are based on vinyl acetate and vinyl esters of neoalkanoic acid. However, the requirements for the European Technical Approval Guidelines (ETAG 004) for construction products, especially the tensile strength in the weft and warp direction is not optimal.

US 2010/0167610 A1 discloses aqueous dispersions comprising copolymers which are predominantly composed of vinyl acetate monomers and monomer units from vinyl esters of alpha-monosubstituted fatty acids such as vinyl 2-etylhexanoate. The aqueous formulations can be used as binders for fibrous substrates such as woven or non-woven products including textiles, apparel in general, papers, scrim, engineered fabrics, glass or other mineral fibres, roofing or flooring materials. However, the alkaline resistance of mineral fibres such as glass fibres which are coated with said binder formulation can still be improved.

It is an object of the present invention to provide aqueous formulations and binder systems which can be used to increase the alkali resistance of glass fibre scrims. Further, it is an object of the present invention to provide aqueous formulations, binder systems and fibrous products which overcome the problems mentioned before.

It has been found that an aqueous formulation which comprises a specific vinyl acetate copolymer provides a solution to the above mentioned problems.
The first embodiment of the present invention is a fibrous product comprising a glass fibre scrim and an aqueous formulation comprising polymer (A) which is obtainable by polymerizing a monomer mixture comprising or consisting of
a) 55 to 90 wt.-% vinyl acetate,
b) 5 to 40 wt.-% ethylene,
c) 0.5 to 10 wt.-% of an ethylenically unsaturated self crosslinking agent and
d) up to 10 wt.-% of ethylenically unsaturated monomers which are different from monomers a) to c)
via free radical emulsion polymerization and
wherein the weight is based on the total weight of the monomers in the monomer mixture.
The aqueous formulation comprises as an essential component polymer (A). Polymer (A) which is present in the aqueous formulation is preferably obtainable by radically polymerizing a monomer mixture comprising or essentially consisting of monomers a) to d) in the amounts defined above. The monomers which can be used for the monomer mixture to obtain polymer (A) are hereinafter described in more detail.

### Monomer a)

Monomer a) is vinyl acetate which is present in the monomer mixture in an amount ranging from 55 to 90 wt.- %. Preferably the monomer mixture comprises monomer a) in an amount ranging from 60 to 85 wt.-%, more preferably from 65 to 80 wt.-%, wherein the weight is based on the total weight of the monomers in the monomer mixture.

### Monomer b)

Monomer b) is ethylene which is present in the monomer mixture in an amount ranging from 5 to 40 wt.-%. According to a preferred embodiment of the present invention the monomer mixture comprises monomer b) in an amount ranging from 10 to 35 wt.-%, more preferably 15 to 30 wt.-% and most preferably 20 to 25 wt.-%, wherein the weight is based on the total weight of monomers in the monomer mixture.

### Monomer c)

Monomer c) is an ethylenically unsaturated self-crosslinking agent which is present in the monomer mixture in an amount ranging from 0.5 to 10 wt.-%, preferably from 1 to 8 wt.-%. The monomer mixture preferably comprises 2 to 7 wt.-% and more preferably 3 to 6 wt.-% of monomer c), wherein the weight is based on the total weight of the monomers in the monomer mixture. Monomer c) is a self-crosslinking monomer (referred to in the art sometimes as post-crosslinking comonomer). The ethylenically unsaturated self-crosslinking agent (monomer c)) is preferably at least one selected from the group consisting of acrylamidoglycolic acid (AGA), methyl acrylamidoglycolate methyl ether, N-methylolacrylamide (NMA), N-methylolmethacrylamide (NMMA), allyl-N-methylolcarbamate, alkyl ether of N-methylolacrylamide, of N-methylolmethacrylamide or of allyl-N-methylolcarbamate, ester of N-methylolacrylamide, of N-methylolmethacrylamide or of allyl-N-methylolcarbamate.

Especially good results could be achieved wherein monomer c) is N-methylolacrylamide (NMA) and/or N-methylolmethacrylamide (NMMA).

### Monomer d)

Monomer d) is an ethylenically unsaturated monomer which is different from the monomers a), b) and c). Monomer d) is optionally present in the monomer mixture in an amount up to 10 wt.-%, preferably up to 5 wt.-%. According to a preferred embodiment of the present invention the monomer mixture comprises monomer d) in an amount of less than 2.5 wt.-%, more preferably less than 0.5 wt.-%, wherein the weight is based on the total weight of the monomers in the monomer mixture. According to a preferred embodiment of the present invention monomer d) is an ethylenically unsaturated monomer which bears at least one acid and/or acid salt group, preferably selected from the group consisting of carboxylic acid, sulfonic acid, phosphoric acid, phosphonic acid and the alkali metal salts or ammonium salts thereof.

Non limiting examples of monomer d) are ethylenically unsaturated, ionic monomers, such as compounds which bear at least one carboxylic acid, sulfonic acid, phosphoric acid or phosphonic acid group directly adjacent to the double bond unit, or else are bonded thereto via a spacer. Examples include α, β-unsaturated C₃-C₈-monocarboxylic acids, α, β-unsaturated C₄-C₈-dicarboxylic acids and anhydrides thereof, and monoesters of α, β-unsaturated C₄-C₈-dicarboxylic acids.

Preference is given to unsaturated monocarboxylic acids, for example acrylic acid, methacrylic acid, and crotonic acid and the anhydrides thereof; unsaturated dicarboxylic acids, for example maleic acid, fumaric acid, itaconic acid and citraconic acid and the monoesters thereof with C₁-C₁₂-alkanols such as monomethyl maleate and mono-n-butyl maleate. Further preferred ethylenically unsaturated ionic monomers are ethylenically unsaturated sulfonic acids, for example vinylsulfonic acid, 2-acrylamido-2-methylpropanesulfonic acid, 2-acryloyloxy- and 2-methacryloyloxyethanesulfonic acid, 3-acryloyloxy- and 3-methacryloyloxypropanesulfonic acid and vinylbenzenesulfonic acid, and ethylenically unsaturated phosphonic acids, for example vinylphosphonic acid.

In addition, as well as the acids mentioned, it is also possible to use the salts thereof, preferably the alkali metal salts thereof or the ammonium salts thereof and especially the sodium salts thereof, for example the sodium salts of vinylsulfonic acid and of 2-acrylamidopropanesulfonic acid. Further, preferably monomer d) is acrylamide.

Preferably the aqueous formulation comprises polymer (A) which is obtainable by polymerizing a monomer mixture comprising
a) 60 to 85 wt.-% vinyl acetate,
b) 10 to 35 wt.-% ethylene,
c) 1 to 8 wt.-% of an ethylenically unsaturated self crosslinking agent and
d) up to 5 wt.-%, preferably up to 2.5 wt.-% of ethylenically unsaturated monomers which are different from monomers a) to c),
wherein the weight is based on the total weight of the monomers in the monomer mixture.

Further, preferably the aqueous formulation comprises polymer (A) which is obtainable by polymerizing a monomer mixture comprising
a) 65 to 80 wt.-% vinyl acetate,
b) 15 to 30 wt.-% ethylene,
c) 2 to 6 wt.-% of an ethylenically unsaturated self crosslinking agent and
d) up to 0.5 wt.-% of ethylenically unsaturated monomers which are different from monomers a) to c),
wherein the weight is based on the total weight of the monomers in the monomer mixture.

Especially preferred is an aqueous formulation comprising polymer (A) which is obtainable by polymerizing a monomer mixture comprising
a) 70 to 75 wt.-% vinyl acetate,
b) 20 to 25 wt.-% ethylene,
c) 3 to 6 wt.-% of an ethylenically unsaturated self crosslinking agent and
d) up to 0.5 wt.-% of ethylenically unsaturated monomers which are different from monomers a) to c),
wherein the weight is based on the total weight of the monomers in the monomer mixture.

Preferably, the weight ratio of monomer a) to monomer b) in the monomer mixture ranges from 2:1 to 6:1, more preferably 3:1 to 5:1 and most preferably 3:1 to 4:1. Further, preferably the weight ratio of monomer b) to monomer c) in the monomer mixture is from 6:1 to 15:1, more preferably 9:1 to 12:1.

The monomer mixture used to obtain polymer (A) is preferably essentially free of vinyl ester of fatty acids having more than 4 carbon atoms, preferably essentially free of vinyl ester of alpha-monosubstituted fatty acids having more than 4 carbon atoms.

Further, according to a preferred embodiment the monomer mixture is essentially free of vinyl ester of neoalkanoic acid, preferably essentially free of vinyl ester of neoalkanoic acid having more than 5 carbon atoms.

Preferably, the monomer mixture is essentially free of vinyl ester of carboxylic acids having more than 2 carbon atoms.

Essentially free within the meaning of the present invention means that the monomer can be present in the monomer mixture in an amount of less than 3 wt.-%, preferably less than 1 wt.-%, more preferably less than 0.5 wt.-% most preferably less than 0.1 wt.-% and especially preferably free of the monomer wherein the weight is based on the total weight of the monomers in the monomer mixture.

Polymer (A) preferably has a glass transition temperature (Tg) of less than 25°C, more preferably less than 10°C, furthermore preferably less than 0°C and especially preferably ranging from -20°C to -5°C.

The glass transition temperature (Tg) is determined according to ASTM E 1356 by differential scanning colorimetry (DSC), using a Mettler DSC 820 with a fluid N₂ cooling system. The tested range is from -80°C to 130°C with a heating rate of 10°C/min.

Polymer (A) is obtainable by polymerizing the monomer mixture via free radical emulsion polymerization. Therefore, the polymerization is preferably carried out in the presence of an emulsifier. According to a preferred embodiment the polymerization is carried out in the presence of a nonionic surfactant, preferably ethoxylated aliphatic alcohols or phenols, more preferably selected from the group consisting of C₈ to C₂₂ alcohols with an average degree of ethoxylation of 3 to 50, mono-, di- and trialkylphenols with an alkyl radical having 4 to 9 carbon atoms and an average ethoxylation degree of 3 to 50. Emulsifiers essentially free of alkylphenol moieties are preferred.

The aqueous formulation preferably additionally comprises a protective colloid which is more preferably selected from the group consisting of hydroxyethyl cellulose, starch and polyvinyl alcohol.

The aqueous formulation preferably has a viscosity ranging from 50 to 2500 mPas, preferably ranging from 50 to 2000 mPas, more preferably ranging from 50 to 1700 mPas determined at 25°C with a Brookfield DV-I at 20 rpm; spindle 2.

The aqueous formulation preferably has a solid content of at least 35 wt.-%, more preferably at least 40 wt.-%, most preferably a solid content ranging from 45 to 60 wt.-% based on the total weight of the aqueous formulation. The solid content is determined by drying 1 to 2g of the aqueous formulation at 105°C for 4 hours. Subsequently the weight of the dried residue is measured.

According to a further preferred embodiment the aqueous formulation has a grit of less than 0.1 wt.-%, preferably less than 0.02 wt.-%, most preferably less than 0.01 wt.-%. The grit is determined by filtering 100g of the aqueous formulation through a 40µm filter, and subsequently drying and weighing the dried grit. The weight percent is based on the total weight of the aqueous formulation.

According to a preferred embodiment the aqueous formulation comprises emulsifiers, protective colloids and optional further additives, preferably additives which may be used during the synthesis of polymer (A). Further, preferably the aqueous formulation is filtered through a 100µm filter in order to separate possible coarse particles.

The aqueous formulation may be obtained by the method comprising the following steps:
i) radically polymerizing a monomer mixture comprising or consisting of
   a) 55 to 90 wt.-% vinyl acetate,
   b) 5 to 40 wt.-% ethylene,
   c) 0.5 to 10 wt.-% of an ethylenically unsaturated self crosslinking agent and
   d) up to 10 wt.-%, preferably up to 5 wt.-% of ethylenically unsaturated monomers which are different from monomers a) to c); wherein the weight is based on the total weight of the monomers in the monomer mixture,
   in the presence of a radical initiator and in an aqueous composition which comprises an emulsifier and a protective colloid,
ii) optionally removing odoriferous substances and/or volatile organic substances and
iii) optionally filtering the reaction mixture.

The preferred embodiments referred to in conjunction with the monomers a), b), c) and d) as well as the emulsifiers and protective colloids in conjunction with the aqueous formulation also apply to the method described above.

Suitable free radical polymerization initiators are all known initiators which are capable of initiating a free radical, aqueous emulsion polymerization. They may be both peroxides, such as, for example, alkali metal peroxodisulfates, and azo compounds. Other polymerization initiators which may be used are so-called redox initiators, which are composed of at least one organic and/or inorganic reducing agent and at least one peroxide and/or hydroperoxide, such as, for example, tert-butyl hydroperoxide with sulfur compounds, such as, for example, sodium salt of hydroxymethanesulfinic acid, sodium sulfite, sodium disulfite, sodium thiosulfate and acetone bisulfite adduct, or hydrogen peroxide with ascorbic acid. Combined systems which contain a small amount of metal compound which is soluble in the polymerization medium and whose metallic component may occur in a plurality of valency states, such as, for example, ascorbic acid/iron sulfate/hydrogen peroxide, may also be used, the sodium salt of hydroxymethanesulfinic acid, acetone bisulfite adduct, sodium sulfite, sodium hydrogen sulfite or sodium bisulfite frequently also being used instead of ascorbic acid and organic peroxides, such as, for example, tert-butyl hydroperoxide, or alkali metal peroxodisulfates and/or ammonium peroxodisulfate, being used instead of hydrogen peroxide. Instead of said acetone bisulfite adduct, it is also possible to use further bisulfite adducts known to the person skilled in the art, as described, for example, in EP-A-0 778 290 and in the literature cited therein. Further preferred initiators are peroxodisulfates, such as, for example, sodium peroxodisulfate. The amount of the free radical initiator systems used is preferably from 0.05 to 2.0% by weight, based on the total amount of the monomers to be polymerized.

The molecular weight of the vinyl ester copolymers can be adjusted by addition of small amounts of one or more substances which regulate the molecular weight. These so-called "chain transfer agent" are used in general in an amount of up to 2% by weight, based on the monomers to be polymerized. "Chain transfer agent" which may be used are all those substances which are known to the person skilled in the art.

For example, organic thio compounds, silanes, allyl alcohols and aldehydes are preferred.

The emulsion polymerization is usually effected by the batch procedure, preferably by a semicontinuous method. In semicontinuous methods, the main amount, i.e. at least 70%, preferably at least 80%, of the liquid monomers to be polymerized are fed continuously (including step gradient procedure) to the polymerization batch. This procedure is also referred to as a monomer feed method, monomer feed being understood as meaning the metering in of gaseous monomers, liquid monomer mixtures, monomer solutions or in particular aqueous monomer emulsions. The metering of the individual monomers can be effected through separate feeds.

In addition to the seed-free method of production, the emulsion polymerization can also be effected by the seed latex method or in the presence of seed latices produced in situ, for establishing a defined polymer particle size. Such methods are known and are described in detail in a large number of patent applications (e.g. EP-A-0 040 419 and EP-A-0 567 812) and publications ("Encyclopedia of Polymer Science and Technology", Vol. 5, John Wiley & Sons Inc., New York 1966, page 847).

After the actual polymerization reaction, it may be desirable and/or necessary to substantially free the aqueous formulation according to the invention from odoriferous substances, such as, for example, residual monomers and other volatile, organic constituents. This can be achieved in a manner known per se, for example physically by distillative removal (in particular via steam distillation) or by stripping with an inert gas. Furthermore, the reduction of the residual monomers can also be effected chemically by free radical post polymerization, in particular by the action of the redox initiator systems, as described, for example, in DE-A-44 35 423. A post polymerization with a redox initiator system comprising at least one organic peroxide and an organic and/or inorganic sulfite is preferred. A combination of physical and chemical methods is particularly preferred, the further reduction of the residual monomer content being effected by means of physical methods to preferably <1000 ppm, particularly preferably <500 ppm, in particular <100, after reduction of the residual monomer content by chemical post polymerization.

According to a preferred embodiment of the method the reaction mixture is finally filtered in order to separate coarse polymer particles. According to a preferred embodiment after polymerizing the monomer mixture the reaction mixture is filtered through a 100µm filter so as to obtain the aqueous formulation.

It has surprisingly been found that especially good results in terms of alkali resistance and processability can be obtained with a binder system which comprises the aqueous formulation.

A further object of the present invention is a fibrous product comprising a glass fibre scrim and a binder system comprising
i) an aqueous formulation according to the present invention and
ii) an aqueous formulation comprising polymer (B) which is a polymer having a glass transition temperature (Tg) ranging from 10 to 50°C, preferably 15 to 50°C, further preferably 20 to 50°C, more preferably ranging from 30 to 40°C.

### Polymer (B) is different from polymer (A).

Polymer (B) can be any polymer which is preferably obtainable by radically polymerizing a monomer or a monomer mixture. According to a preferred embodiment polymer (B) is a copolymer comprising monomer units selected from the group consisting of styrene, butadiene, (meth)acrylic derivatives, vinyl acetate and mixtures thereof. Polymer (B) is preferably a copolymer obtainable by radically polymerizing a monomer mixture comprising styrene and butadiene or styrene and (meth)acrylic derivatives such as (meth)acrylic acid ester or (meth)acrylic amides.

Especially preferred is a polymer (B) which is obtainable by radically polymerizing a monomer mixture comprising at least 90 wt.-%, preferably at least 95 wt.-% vinyl acetate and optionally other polymerizable radically comonomers, preferably N-methylolacrylamide. An example of a suitable polymer (B) is Vinamul^{®} 6044, from Celanese.

An especially preferred binder system to be used in the invention comprises
i) an aqueous formulation as described above and
ii) an aqueous formulation comprising polymer (B) which is obtainable by radically polymerizing a monomer mixture comprising at least 90 wt.-%, preferably at least 95 wt.-% vinyl acetate and optionally other radically polymerizable comonomers, preferably N-methylolacrylamide.

Preferably, the binder system has a weight ratio of polymer (A) to polymer (B) which ranges from 1:99 to 99:1, preferably from 8:2 to 2:8, more preferably from 6:4 to 4:6 and most preferably 5.5:4.5 to 4.5:5.5.

The aqueous formulation ii) which comprises polymer (B) and which is present in the binder system preferably has a solid content of more than 40 wt.-%, preferably ranging from 45 to 60 wt.-% based on the weight of the aqueous formulation ii).

Further disclosed is a kit comprising the aqueous formulation as described above separately from the aqueous formulation ii). The kit can be sold to customers who can prepare the binder system of the invention by simply mixing the aqueous formulation as described above with the aqueous formulation ii) comprising polymer (B) as defined above.

The aqueous formulation and especially the binder system demonstrate an excellent performance in terms of alkali resistance and processability when applied to fibrous products. Therefore, a further embodiment is a fibrous product comprising a fibrous substrate and a binder system as defined above.

The fibrous product of the present invention comprises a fibrous substrate which is a glass fibre scrim.

According to a preferred embodiment the aqueous formulation or the binder system is applied to the glass fibre scrim and subsequently cured, preferably thermally cured. Preferably, the fibrous substrate which is applied with the aqueous formulation or the binder system is cured at a temperature above 100°C, preferably at a temperature above 140°C and more preferably at a temperature ranging from 150 to 250°C. Generally the temperature is applied for a time sufficient to at least partly cure the binder system.

A further embodiment is the use of the aqueous formulation as defined above or the binder system as defined above for coating synthetic or mineral fibres, preferably glass fibre scrims.

Further disclosed is the use of the aqueous formulation or the binder as defined above for the manufacturing of External Insulation Finishing Systems (EIFS).

A further embodiment is the use of the aqueous formulation or the binder system for increasing the alkali resistance of synthetic or mineral fibres, especially glass fibre scrims.

A further embodiment is the use of the aqueous formulation or the binder system in a process for the manufacturing of an alkali resistant glass fibre scrim.

The glass fibre scrim used in the present invention usually has oriented fibres. The glass fibre scrim preferably comprises or is consisting an open mesh glass scrim. The open mesh glass scrim is formed by a plurality of intersecting, continuous multifilament, glass yarns which are bonded at their crossover points to provide dimensional stability to the glass scrim. According to a preferred embodiment the glass scrim is formed by a plurality of generally transverse glass yarns and a plurality of generally longitudinal glass yarns which are bonded at their crossover point to provide dimensional stability to the glass scrim. The glass scrim can be formed from or include yarns of various orientations in place of or in addition to the generally transverse and generally longitudinal yarns including diagonally oriented yarns, randomly oriented yarns and yarns in a 0°/60°/120° orientation, which intersect and are bonded at their crossover points and define a generally open mesh scrim. The scrim can be woven, knitted or nonwoven. Preferably, the glass fibre scrims comprise transverse yarns and the longitudinal yarns are nonwoven. The glass fibre scrim can be formed by the apparatus and process disclosed in US-4,242,779 which is hereby incorporated by reference. This process involves using an apparatus for forming a web of transverse (weft) yarns for use in the scrim and subsequently super imposing one or more webs of longitudinal (warp) yarns on the web of weft yarns to form the open mesh glass scrim.

The number of transverse yarns and longitudinal yarns of the glass fibre scrim may be defined by the number of mesh openings of the scrim. The scrim preferably has less than about 100 mesh opening per square inch (i.e., a pick count less than 10 by 10) or 155000 mesh openings per square meter. Alternatively, the scrim may have less than 70 mesh openings per square inch, or approximately 108500 mesh openings per square meter or even less than 50 mesh openings per square inch, or approximately 77500 openings per square meter. Generally, the individual yarns used to form the glass fibre scrim can have a size ranging from about 1800 m/kg to about 18000 m/kg. In addition, the cross-sectional shape of the yarns may include flat and curved surfaces, or alternatively may be circular, elliptical or polygonal to list a few non-limiting examples of shapes. Preferably, the transverse yarns and the longitudinal yarns which are present in the glass fibre scrim are bonded at their crossover points by the polymeric binder.

The following examples are presented to further illustrate the present invention and should not be taken as limiting the invention.

### Abbreviations:

- VA:: vinyl acetate monomer, obtained from Celanese Chemicals Europe GmbH;
- V2EH:: Vinyl 2-ethylhexanoate monomer, available from Japan VAM and Poval Co, Ltd; used as supplied;
- E:: Ethylene monomer
- NMA-LF:: a blend of N-methylolacrylamide/acrylamide (weight ratio: 7:5) (48% aq. Solution) commercially available from Cytec Industries.
- SVS:: Sodium vinyl sulfonate
- VeoVa10:: Vinyl esters of neoalkanoic acids have the following general structure: 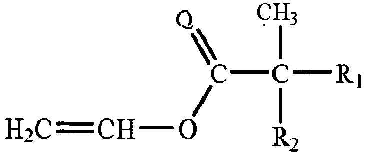 where R₁ and R₂ are alkyl groups which together may typically collectively contain from about 6-8 carbon atoms. VeoVa^{®} neoalkanoic vinyl esters are available from Hexion Specialty Chemicals of Columbus, Ohio. In VeoVa^{®} 10, R₁ and R₂ together contain about 7 carbon atoms.

### General measurement methods:

Solid content was measured by drying 1 to 2g of the aqueous dispersion at 105°C for 4 hours, then dividing the weight of dried polymer by the weight of dispersion.

Viscosity was determined at 25°C using a Brookfield DV-I+ Viscometer, spindle 2, speed 20 rpm.

Grit was determined by filtering 100g of dispersion through a 40µ filter, drying and weighing the dried grit. This is expressed as a % on the wet dispersion.

Determination of the Glass Transition Temperature, (Tg), was according to ASTM E 1356 by Differential Scanning Calorimetry, (DSC), using a Mettler DSC 820 with a fluid N₂ cooling system. The tested range is from -80°C to 130°C with a heating rate of 10°C/min.

### Example 1 (Preparation of the aqueous formulation)

An aqueous solution was prepared by the addition of 125.8g of a 10% aqueous solution of hydroxyethyl cellulose, having a Brookfield viscosity at 5% concentration of 100 - 180 mPa.s at 25°C, (Natrosol^{®} 250 LR from Aqualon), and 98.1g of a 70% aqueous solution of an alcohol ethoxylate nonionic surfactant, (Emulsogen^{®} EPN 287 from Clariant), to 3011g of deionized water whilst stirring. 38.1g of a 30% active solution of sodium vinylsulphonate was added, followed by 0.19g of Mohr's salt, then the pH was adjusted to pH 4.4 by the use of phosphoric acid. Then the aqueous solution was charged to a 10-litre pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 686.5g of vinyl acetate was pumped to the reactor, then 1144.1g of ethylene was metered to the reactor, followed by 15% of a solution comprising 15.1g of sodium metabisulphite dissolved in 274.6g of deionized water.

When the reactor temperature stabilized at 35°C, the additions of a solution of 30.2g of sodium persulphate dissolved in 274.6g of deionized water and the remainder of the sodium metabisulphite solution were commenced at a constant rate to last 360 minutes. The temperature was gradually increased to 65°C over a period of approximately 20 minutes. When the internal temperature reached 45°C the additions of separate feeds of 2745.9g of vinyl acetate, and a solution comprising 457.6g of an approximately 48% active blend of N-methylol acrylamide and acrylamide, (Cylink NMA-LF from Cytec), and 196.1g of an alcohol ethoxylate nonionic surfactant, (Emulsogen^{®} EPN 287 from Clariant), in 457.6g of deionized water were added to the reactor at a constant rate over 290 minutes. The reactor temperature was maintained at 65°C for the duration of the reaction.

After the reaction was complete, the reaction mixture was cooled to 50°C and transferred to a degassing vessel. When 50% had been transferred, a solution comprising 3.66g of sodium metabisulphite, 0.46g of Agitan 282 defoamer and 0.09g of ferrous sulphate heptahydrate in 45.8g of deionized water was added over 5 minutes. Once all of the reactor contents were transferred and the pressure was below 1 bar, a solution comprising 4.58g of t-butylhydroperoxide in 45.8g of deionized water was added, and the stripper was kept at 50°C over 30 minutes. The mixture was cooled and 14.6g of a 12.5% active solution of ammonium hydroxide were added, and the resultant dispersion was filtered through a 180µ mesh. The resultant dispersion had a solids content of 51.1%, viscosity of 336 mPa.s, pH of 4.3, grit, (measured on a 40µ mesh), of 0.009% and a Tg, (onset, by DSC), of -11.6°C.

### Example 2 (Preparation of an aqueous formulation)

An aqueous solution was prepared by the addition of 125.8g of a 10% aqueous solution of hydroxyethyl cellulose, having a Brookfield viscosity at 5% concentration of 100 - 180 mPa.s at 25°C, (Natrosol^{®} 250 LR from Aqualon), and 98.1g of a 70% aqueous solution of an alcohol ethoxylate nonionic surfactant, (Emulsogen^{®} EPN 287 from Clariant), to 3011g of deionized water whilst stirring. 38.1g of a 30% active solution of sodium vinylsulphonate was added, followed by 0.19g of Mohr's salt, then the pH was adjusted to pH 4.4 by the use of phosphoric acid. Then the aqueous solution was charged to a 10-litre pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 686.5g of vinyl acetate was pumped to the reactor, then 457.7g of ethylene was metered to the reactor, followed by 15% of a solution comprising 15.1g of sodium metabisulphite dissolved in 274.6g of deionized water.

When the reactor temperature stabilized at 35°C, the additions of a solution of 30.2g of sodium persulphate dissolved in 274.6g of deionized water and the remainder of the sodium metabisulphite solution were commenced at a constant rate to last 360 minutes. The temperature was gradually increased to 65°C over a period of approximately 20 minutes. When the internal temperature reached 45°C the additions of separate feeds of 2745.9g of vinyl acetate, and a solution comprising 457.6g of an approximately 48% active blend of N-methylol acrylamide and acrylamide, (Cylink NMA-LF from Cytec), and 196.1g of an alcohol ethoxylate nonionic surfactant, (Emulsogen EPN 287 from Clariant), in 457.6g of deionized water were added to the reactor at a constant rate over 290 minutes. When the internal temperature reached 65°C, a further 686.5g of ethylene was slow-added, maintaining the pressure at 65 bar until all of the ethylene was added. The reactor temperature was maintained at 65°C for the duration of the reaction.

After the reaction was complete, the reaction mixture was cooled to 50°C and transferred to a degassing vessel. When 50% had been transferred, a solution comprising 3.66g of sodium metabisulphite, 0.46g of Agitan^{®} 282 defoamer and 0.09g of ferrous sulphate heptahydrate in 45.8g of deionized water was added over 5 minutes. Once all of the reactor contents were transferred and the pressure was below 1 bar, a solution comprising 4.58g of t-butylhydroperoxide in 45.8g of deionized water was added, and the stripper was kept at 50°C over 30 minutes. The mixture was cooled and 14.6g of a 12.5% active solution of ammonium hydroxide were added, and the resultant dispersion was filtered through a 180µ mesh. The resultant dispersion had a solids content of 50.7%, viscosity of 200 mPa.s, pH of 4.1, grit, (measured on a 40µ mesh), of 0.002% and a Tg, (onset, by DSC), of -11.5°C.

### Example 3 (Preparation of an aqueous formulation)

An aqueous solution was prepared by the addition of 125.8g of a 10% aqueous solution of hydroxyethyl cellulose, having a Brookfield viscosity at 5% concentration of 100 - 180 mPa.s at 25°C, (Natrosol^{®} 250 LR from Aqualon), and 98.1 g of a 70% aqueous solution of an alcohol ethoxylate nonionic surfactant, (Emulsogen^{®} EPN 287 from Clariant), to 3011g of deionized water whilst stirring. 38.1g of a 30% active solution of sodium vinylsulphonate was added, followed by 0.19g of Mohr's salt, then the pH was adjusted to pH 4.4 by the use of phosphoric acid. Then the aqueous solution was charged to a 10-litre pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 45°C. 686.5g of vinyl acetate was pumped to the reactor, then 457.7g of ethylene was metered to the reactor, followed by 15% of a solution comprising 15.1g of sodium metabisulphite dissolved in 274.6g of deionized water.

When the reactor temperature stabilized at 45°C, the additions of a solution of 30.2 g of sodium persulphate dissolved in 274.6g of deionized water and the remainder of the sodium metabisulphite solution were commenced at a constant rate to last 300 minutes. The temperature was gradually increased to 75°C over a period of approximately 20 minutes. When the internal temperature reached 55°C the additions of separate feeds of 2745.9g of vinyl acetate, and a solution comprising 457.6g of an approximately 48% active blend of N-methylol acrylamide and acrylamide, (Cylink NMA-LF from Cytec), and 196.1g of an alcohol ethoxylate nonionic surfactant, (Emulsogen EPN 287 from Clariant), in 457.6g of deionized water were added to the reactor at a constant rate over 230 minutes. When the internal temperature reached 75°C, a further 686.5g of ethylene was slow-added, maintaining the pressure at 65 bar until all of the ethylene was added. The reactor temperature was maintained at 65°C for the duration of the reaction.

After the reaction was complete, the reaction mixture was cooled to 50°C and transferred to a degassing vessel. When 50% had been transferred, a solution comprising 3.66g of sodium metabisulphite, 0.46g of Agitan 282 defoamer and 0.09g of ferrous sulphate heptahydrate in 45.8g of deionized water was added over 5 minutes. Once all of the reactor contents were transferred and the pressure was below 1 bar, a solution comprising 4.58g of t-butylhydroperoxide in 45.8g of deionized water was added, and the stripper was kept at 50°C over 30 minutes. The mixture was cooled and 14.6g of a 12.5% active solution of ammonium hydroxide were added, and the resultant dispersion was filtered through a 180µ mesh. The resultant dispersion had a solids content of 51.2%, viscosity of 1450 mPa.s, pH of 4.8, grit, (measured on a 40µ mesh), of 0.007% and a Tg, (onset, by DSC), of -12.6°C.

### Example 4 (Preparation of an aqueous formulation)

The procedure of Example 2 was followed, except that the 30.2g of sodium persulphate was replaced by ammonium persulphate. The resultant dispersion had a solids content of 50.9%, viscosity of 210 mPa.s, pH of 4.7, grit, (measured on a 40µ mesh), of 0.006% and a Tg, (onset, by DSC), of -12.5°C.

### Example 5 (Preparation of an aqueous formulation)

The procedure of Example 3 was followed, except that the 30.2g of sodium persulphate was replaced by ammonium persulphate. The resultant dispersion had a solids content of 50.7%, viscosity of 1600 mPa.s, pH of 4.8, grit, (measured on a 40µ mesh), of 0.004% and a Tg, (onset, by DSC), of -11.5°C.

### Comparative Example 1 (corresponds to Example 3-1 from EP 2 202 251 A1)

An aqueous solution was prepared by the addition of 125.8g of a 10% aqueous solution of hydroxyethyl cellulose, having a Brookfield viscosity at 5% concentration of 100 - 180 mPa.s at 25°C, (Natrosol^{®} 250 LR from Aqualon), 282.6g of a 70% aqueous solution of a an alcohol ethoxylate nonionic surfactant, (Emulsogen EPN 287 from Clariant), and 30.5g of a 30% aqueous solution of a secondary alkane sulphonate anionic surfactant, (Hostapur SAS 30 from Clariant), to 2984g of deionized water whilst stirring. 38.1g of a 30% active solution of sodium vinylsulphonate was added, followed by 0.19g of Mohr's salt, then the pH was adjusted to pH 4.4 by the use of phosphoric acid. Then the aqueous solution was charged to a 10-litre pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 16.76% of a monomer mixture comprising 3371.3g of vinyl acetate and 722.7g of vinyl 2-ethylhexanoate was pumped to the reactor. 480.3g of ethylene was metered to the reactor, followed by 10% of a solution comprising 22.9g of sodium metabisulphite dissolved in 274.5g of deionized water.

When the reactor temperature stabilized at 35°C, the additions of a solution of 30.2g of sodium persulphate dissolved in 274.5g of deionized water and the remainder of the sodium metabisulphite solution were commenced at a constant rate to last 360 minutes. The temperature was gradually increased to 65°C over a period of approximately 20 minutes, at which time the additions of the remainder of the monomer mixture and a solution of 500.3g of an approximately 48% active blend of N-methylol acrylamide and acrylamide, (Cylink NMA-LF from Cytec), in 452.9g of deionized water were added separately to the reactor at a constant rate over 300 minutes. The reactor temperature was maintained at 65°C for the duration of the reaction.

After the reaction was complete, the reaction mixture was cooled to 50°C and transferred to a degassing vessel. A solution comprising 3.66g of sodium metabisulphite and 0.09g of ferrous sulphate heptahydrate in 45.7g of deionized water was added over 5 minutes, followed by a solution comprising 4.57g of t-butylhydroperoxide in 45.7g of deionized water over 30 minutes. The mixture was cooled, then 0.32g of Agitan 282 and 14.64g of a 12.5% active solution of ammonium hydroxide were added, and the resultant dispersion was filtered through a 180µ mesh. The resultant dispersion had a solids content of 51.2%, viscosity of 200 mPa.s, pH of 3.5, grit, (measured on a 40µ mesh), of 0.015% and a Tg, (onset, by DSC), of -0.7°C.

### Comparative Example 2 (corresponds to Example 2-1 from EP 2 202 253 A2)

A similar procedure was followed to that of Comparative Example 1 except that the monomer mixture comprised 2891g of vinyl acetate and 1203g of VeoVa 10. The resultant dispersion had a solids content of 50.7%, viscosity of 190 mPa.s, pH of 3.6, grit, (measured on a 40µ mesh), of 0.012% and a Tg, (onset, by DSC), of -1.8°C.

Table 1 shows the monomer mixtures which have been polymerized in the examples. The amounts referred to in Table 1 are in weight percent (wt.-%) wherein the weight is based on the total amount of monomers in the monomer mixture.

**Table 1: Monomer mixtures polymerized in the examples**

| | **Example 1** | **Example 2** | **Example 3** | **Example 4** | **Example 5** | **Comparative Example 1** | **Comparative Example 2** |
|---|---|---|---|---|---|---|---|
| VA | 71.4 | 71.4 | 71.4 | 71.4 | 71.4 | 69.8 | 59.9 |
| E | 23.8 | 23.8 | 23.8 | 23.8 | 23.8 | 10.0 | 10.0 |
| V2EH | | | | | | 15.0 | |
| VeoVa 10 | | | | | | | 24.9 |
| NMA-LF | 4.57 | 4.57 | 4.57 | 4.57 | 4.57 | 4.97 | 4.97 |
| SVS | 0.23 | 0.23 | 0.23 | 0.23 | 0.23 | 0.23 | 0.23 |

### Preparation of the binder systems:

The aqueous formulations obtained in Example 1 to 5 and Comparative Example 1 and 2 were mixed in a 1:1 weight ratio with Vinamul^{®} 6044 (commercially available from Celanese Emulsions). Vinamul^{®} 6044 is an aqueous formulation comprising a polymer which is obtainable by radically polymerizing 96 wt.-% vinyl acetate and 4 wt.-% N-methylolacrylamid. The solid content of Vinamul^{®} 6044 is 45 wt.-%, based on the total weight of the aqueous formulation.

With the binder system thus obtained crude scrims were impregnated in a bath to achieve 20% binder add-on and cured for 5 min at 170°C in a Mathis oven.

The test method used to determine the tensile strength and elongation of the reinforcement as-delivered and after aging was that of European Technical Approval Guidelines (ETAG 0004) for construction products. The tensile strength and elongation of the reinforcement was measured in the weft and warp direction on 10 samples respectively on the as-delivered state and after immersion in alkaline solution (aging) scrims. The samples measured 50mm by at least 300mm. They contained at minimum 5 threads within the width.

The free length of the sample between clamps was 200mm. The tensile force was increased with a constant crosshead speed of (100 +/- 5)mm/min until failure occurred. The strength in Newtons, (N), at failure and the elongation was recorded. The mean values of tensile strength and elongation was calculated from these individual values. The residual value calculated from the mean tensile strength value after aging was compared to the mean tensile strength value in the as-delivered state

The test on the as-delivered state was conducted after conditioning the samples at (23+/- 2)°C and (50 +/- 5)%RH for at least 24 hours.

The sample was immersed for 28 days in alkaline solution at (23+/-2)°C. About 20 samples (10 in weft and 10 in warp direction) were stored in 4 liters alkaline solution. The solution was composed as follows: 1 g NaOH, 4g KOH, 0.5g Ca(OH)2 to 1 litre of distilled water.

The sample was rinsed by immersion for 5 minutes in acid solution (5ml HCl (35% diluted) to 4 litres water) and then placed successively in 3 baths of water (4 litres each). The samples were left for 5 minutes in each bath. They were subsequently dried at (23+/-2)°C and (50+/- 5)% RH for 48 hours.

After aging the residual strength must be at least 50% of the strength of the as-delivered state (= retention) and 200 N/cm in order to meet the specifications. Test specimens had a width of 5cm in warp direction and 5.5cm in weft direction and values given in Table 1 were calculated to N / 1cm. These results show that the binder systems of the invention are suitable for producing scrims which fulfil the ETAG 0004 norm.

Table 2 shows the binder systems (Examples 1A to 5A) which have been prepared from the aqueous formulation (Examples 1 to 5; Example 1 corresponds to binder system 1A and so on) and which show an excellent alkali resistance.

**Table 2: Alkali Aging results of different binder systems**

| Tensile strength at failure | Example 1A | Example 2A | Example 3A | Example 4A | Example 5A | Comparative Example 1A | Comparative Example 2A | Requirement according to ETAG 0004 |
|---|---|---|---|---|---|---|---|---|
| Warp direction, without alkali treatment [N / cm] | 457 | 441 | 426 | 390 | 527 | 477 | 484 | > 400 |
| Warp direction, after alkali treatment [N / cm] | 398 | 349 | 339 | 365 | 346 | 328 | 317 | > 200 |
| Warp direction, retention | 87% | 79% | 80% | 94% | 66% | 69% | 65% | > 50% |
| Weft direction, without alkali treatment [N / cm] | 598 | 540 | 557 | 579 | 501 | 602 | 587 | > 400 |
| Weft direction, after alkali treatment [N / cm] | 492 | 493 | 523 | 408 | 500 | 400 | 381 | > 200 |
| Weft direction, retention | 82% | 91% | 94% | 70% | 100% | 66% | 65% | > 50 |

## Claims

1. A fibrous product comprising a glass fibre scrim and an aqueous formulation comprising polymer (A) which is obtainable by
polymerizing a monomer mixture comprising
a) 55 to 90 wt.-% vinyl acetate,
b) 5 to 40 wt.-% ethylene,
c) 0.5 to 10 wt.-% of an ethylenically unsaturated self crosslinking agent and
d) up to 10 wt.-% of ethylenically unsaturated monomers which are different from monomers a) to c),
via free radical emulsion polymerization and
wherein the weight is based on the total weight of monomers in the monomer mixture.

2. A fibrous product according to claim 1 wherein said monomer mixture comprises
a) 60 to 85 wt.-% vinyl acetate,
b) 10 to 35 wt.-% ethylene,
c) 1 to 8 wt.-% of an ethylenically unsaturated self crosslinking agent and
d) up to 5 wt.-%, preferably up to 2.5 wt.-% of ethylenically unsaturated monomers which are different from monomers a) to c),
wherein the weight is based on the total weight of monomers in the monomer mixture.

3. A fibrous product according to claim 1 wherein said monomer mixture comprises
a) 65 to 80 wt.-% vinyl acetate,
b) 15 to 30 wt.-% ethylene,
c) 2 to 6 wt.-% of an ethylenically unsaturated self crosslinking agent and
d) up to 0.5 wt.-% of ethylenically unsaturated monomers which are different from monomers a) to c),
wherein the weight is based on the total weight of the monomers in the monomer mixture.

4. A fibrous product according to claim 1 wherein said monomer mixture comprises
a) 70 to 75 wt.-% vinyl acetate,
b) 20 to 25 wt.-% ethylene,
c) 3 to 6 wt.-% of an ethylenically unsaturated self crosslinking agent and
d) up to 0.5 wt.-% of ethylenically unsaturated monomers which are different from monomers a) to c)
wherein the weight is based on the total weight of monomers in the monomer mixture.

5. A fibrous product according to at least one of claims 1 to 4 wherein polymer (A) has a glass transition temperatures (Tg) of less than 25°C, preferably less than 10°C, more preferably less than 0°C and especially preferably ranging from -20°C to -5°C.

6. A fibrous product according to at least one of claims 1 to 5, wherein the ethylenically unsaturated self crosslinking agent (monomer c)) is at least one selected from the group consisting of acrylamidoglycolic acid (AGA), methyl acrylamidoglycolate methyl ether, N-methylolacrylamide (NMA), N-methylolmethacrylamide (NMMA), allyl-N-methylolcarbamate, alkyl ether of N-methylolacrylamide, of N-methylolmethacrylamide and of allyl-N-methylolcarbamate, ester of N-methylolacrylamide, of N-methylolmethacrylamide and of allyl-N-methylolcarbamate.

7. A fibrous product according to at least one of claims 1 to 6, wherein the ethylenically unsaturated self crosslinking agent (monomer c)) is N-methylolacrylamide (NMA) and/or N-methylolmethacrylamide (NMMA).

8. A fibrous product according to at least one of claims 1 to 7, wherein monomer d) is an ethylenically unsaturated monomer which bears at least one acid and/or acid salt group, preferably selected from the group consisting of carboxylic acid, sulfonic acid, phosphoric acid, phosphonic acid and the alkali metal salts or ammonium salts thereof.

9. A fibrous product comprising a glass fiber scrim and a binder system comprising
i) an aqueous formulation as defined in at least one of claims 1 to 8 and
ii) an aqueous formulation comprising polymer (B) which is a polymer with a glass transition temperature (Tg) ranging from 10 to 50°C, determined according to ASTME 1356.

10. A fibrous product according to claim 9 wherein the weight ratio of polymer (A) to polymer (B) ranges from 1:99 to 99:1, preferably from 8:2 to 2:8, more preferably from 6:4 to 4:6 and most preferably 5.5:4.5 to 4.5:5.5.

11. A fibrous product according to at least one of claims 1 to 10 wherein the aqueous formulation or the binder system is applied to the glass fibre scrim and subsequently cured, preferably thermally cured, more preferably cured at a temperature above 110°C, further preferably cured at a temperature above 140°C and especially preferably at a temperature ranging from 150 to 250°C.

12. A fibrous product according to at least one of claims 1 to 11 wherein the glass fibre scrim comprises transverse yarns and longitudinal yarns which are bonded at their crossover points.

13. A fibrous product according to at least one of claims 1 to 12, wherein the glass fibre scrim has less than 155000 mesh openings per square meter and the individual yarns used to form the scrim have a size ranging from 1800 m/kg to 18000 m/kg.

14. Use of an aqueous formulation comprising polymer (A) which is obtainable by polymerizing a monomer mixture comprising
a) 55 to 90 wt.-% vinyl acetate,
b) 5 to 40 wt.-% ethylene,
c) 0.5 to 10 wt.-% of an ethylenically unsaturated self crosslinking agent and
d) up to 10 wt.-% of ethylenically unsaturated monomers which are different from monomers a) to c),
via free radical emulsion polymerization and
wherein the weight is based on the total weight of monomers in the monomer mixture,
for coating a glass fibre scrim or
in a process for the manufacturing of an alkali-resistant glass fibre scrim.

15. Use of a binder system as defined in claim 9 for coating a glass fibre scrim or for increasing the alkali resistance of glass fibre scrims or
in a process for the manufacturing of an alkali-resistant glass fibre scrim.

## Patentansprüche

1. Faserförmiges Produkt umfassend ein Glasfasergelege (glass fibre scrim) und eine wässrige Formulierung umfassend Polymer (A), das erhältlich ist durch Polymerisation einer Monomermischung umfassend
a) 55 bis 90 Gewichtsprozent Vinylacetat,
b) 5 bis 40 Gewichtsprozent Ethylen,
c) 0,5 bis 10 Gewichtsprozent eines ethylenisch ungesättigten selbstvernetzenden Mittels und
d) bis zu 10 Gewichtsprozent von ethylenisch ungesättigten Monomeren, die verschieden zu den Monomeren a) bis c) sind, über eine freie radikalische Emulsionspolymerisation und
wobei das Gewicht auf dem Gesamtgewicht der Monomeren in der Monomermischung basiert.

2. Faserförmiges Produkt gemäß Anspruch 1, wobei die Monomermischung umfasst
a) 60 bis 85 Gewichtsprozent Vinylacetat,
b) 10 bis 35 Gewichtsprozent Ethylen,
c) 1 bis 8 Gewichtsprozent eines ethylenisch ungesättigten selbstvernetzenden Mittels und
d) bis zu 5 Gewichtsprozent, vorzugsweise bis zu 2,5 Gewichtsprozent von ethylenisch ungesättigten Monomeren, die unterschiedlich zu den Monomeren a) bis c) sind,
wobei das Gewicht auf dem Gesamtgewicht der Monomeren in der Monomermischung basiert.

3. Faserförmiges Produkt gemäß Anspruch 1, wobei die Monomermischung umfasst
a) 65 bis 80 Gewichtsprozent Vinylacetat,
b) 15 bis 30 Gewichtsprozent Ethylen,
c) 2 bis 6 Gewichtsprozent eines ethylenisch ungesättigten selbstvernetzenden Mittels und
d) bis zu 0,5 Gewichtsprozent eines ethylenisch ungesättigten Monomers, das verschieden zu den Monomeren a) bis c) ist,
wobei das Gewicht auf dem Gesamtgewicht der Monomeren in der Monomermischung basiert.

4. Faserförmiges Produkt gemäß Anspruch 1, wobei die Monomermischung umfasst
a) 70 bis 75 Gewichtsprozent Vinylacetat,
b) 20 bis 25 Gewichtsprozent Ethylen,
c) 3 bis 6 Gewichtsprozent eines ethylenisch ungesättigten selbstvernetzenden Mittels und
d) bis zu 0,5 Gewichtsprozent von ethylenisch ungesättigten Monomeren, die unterschiedlich zu den Monomeren a) bis c) sind,
wobei das Gewicht auf dem Gesamtgewicht der Monomeren in der Monomermischung basiert.

5. Faserförmiges Produkt gemäß mindestens einem der Ansprüche 1 bis 4, wobei Polymer (A) eine Glasübergangstemperatur (Tg) von weniger als 25 °C, vorzugsweise weniger als 10 °C, mehr bevorzugt weniger als 0 °C und insbesondere bevorzugt im Bereich von -20 °C bis -5 °C hat.

6. Faserförmiges Produkt gemäß mindestens einem der Ansprüche 1 bis 5, wobei das ethylenisch ungesättigte selbstvernetzende Mittel (Monomer c)) mindestens eines ist ausgewählt aus der Gruppe bestehend aus Acrylamidoglycolsäure (AGA), Methylacrylamidoglycolatmethylether, N-Methylolacrylamid (NMA), N-Methylolmethacrylamid (NMMA), Allyl-N-methylolcarbamat, Alkylether von N-Methylolacrylamid, von N-Methylolmethacrylamid und von Allyl-N-methylolcarbamat, Ester von N-Methylolacrylamid, von N-Methylolmethacrylamid und von Allyl-N-methylolcarbamat.

7. Faserförmiges Produkt gemäß mindestens einem der Ansprüche 1 bis 6, wobei das ethylenisch ungesättigte selbstvernetzende Mittel (Monomer c)) N-Methylolacrylamid (NMA) und/oder N-Methylolmethacrylamid (NMMA) ist.

8. Faserförmiges Produkt gemäß mindestens einem der Ansprüche 1 bis 7, wobei Monomer d) ein ethylenisch ungesättigtes Monomer ist, das mindestens eine Säure und/oder saure Salzgruppe, vorzugsweise ausgewählt aus der Gruppe bestehend aus Carbonsäure, Sulfonsäure, Phosphorsäure, Phosphonsäure und den Alkalimetallsalzen oder Ammoniumsalzen davon trägt.

9. Faserförmiges Produkt umfassend ein Glasfasergelege und ein Bindersystem umfassend
i) eine wässrige Formulierung wie in mindestens einem der Ansprüche 1 bis 8 definiert und
ii) eine wässrige Formulierung umfassend Polymer (B), welches ein Polymer mit einer Glasübergangstemperatur (Tg) im Bereich von 10 bis 50 °C ist, bestimmt gemäß ASTME 1356.

10. Faserförmiges Produkt gemäß Anspruch 9, wobei das Gewichtsverhältnis von Polymer (A) zu Polymer (B) im Bereich von 1:99 bis 99:1, vorzugsweise von 8:2 bis 2:8, weiter bevorzugt von 6:4 bis 4:6 und am meisten bevorzugt 5,5:4,5 bis 4,5:5,5 ist.

11. Faserförmiges Produkt gemäß mindestens einem der Ansprüche 1 bis 10, wobei die wässrige Formulierung oder das Bindesystem auf das Glasfasergelege angewendet wird und anschließend gehärtet wird, vorzugsweise thermisch gehärtet, weiter bevorzugt gehärtet bei einer Temperatur über 110 °C, weiter vorzugsweise gehärtet bei einer Temperatur über 140 °C und insbesondere bevorzugt bei einer Temperatur im Bereich von 150 bis 250 °C.

12. Faserförmiges Produkt gemäß mindestens einem der Ansprüche 1 bis 11, wobei das Glasfasergelege quer verlaufende Garne und längs verlaufende Garne, die an ihren Kreuzungspunkten verbunden sind, umfasst.

13. Faserförmiges Produkt gemäß mindestens einem der Ansprüche 1 bis 12, wobei das Glasfasergelege weniger als 155.000 Maschenöffnungen (mesh openings) pro m² hat und die individuellen Garne, die verwendet wurden, um das Gelege zu bilden, eine Größe im Bereich von 1800 m/kg bis 18.000 m/kg haben.

14. Verwendung einer wässrigen Formulierung umfassend Polymer (A), welches durch Polymerisation einer Monomermischung umfassend
a) 55 bis 90 Gewichtsprozent Vinylacetat,
b) 5 bis 40 Gewichtsprozent Ethylen,
c) 0,5 bis 10 Gewichtsprozent eines ethylenisch ungesättigten selbstvernetzenden Mittels und
d) bis zu 10 Gewichtsprozent von ethylenisch ungesättigten Monomeren, die verschieden zu den Monomeren a) bis c) sind, durch freie radikalische Emulsionspolymerisation erhältlich ist und
wobei das Gewicht auf dem Gesamtgewicht der Monomeren in der Monomermischung basiert,
zur Beschichtung eines Glasfasergeleges oder in einem Verfahren zur Herstellung eines alkaliresistenten Glasfasergeleges.

15. Verwendung eines Bindersystems wie in Anspruch 9 definiert zur Beschichtung eines Glasfasergeleges oder zur Erhöhung der Alkaliresistenz der Glasfasergelege oder in einem Verfahren zur Herstellung eines alkaliresistenten Glasfasergeleges.

## Revendications

1. Produit fibreux comprenant un canevas de fibres de verre et une formulation aqueuse comprenant un polymère (A) qui peut être obtenu par
polymérisation d'un mélange de monomères comprenant
a) de 55 à 90 % en poids d'acétate de vinyle,
b) de 5 à 40 % en poids d'éthylène,
c) de 0,5 à 10 % en poids d'un agent d'auto-réticulation à insaturation éthylénique, et
d) jusqu'à 10 % en poids de monomères à insaturation éthylénique qui sont différents des monomères a) à c),
par polymérisation radicalaire en émulsion et
dans lequel le poids est basé sur le poids total des monomères dans le mélange de monomères.

2. Produit fibreux selon la revendication 1, dans lequel ledit mélange de monomères comprend
a) de 60 à 85 % en poids d'acétate de vinyle,
b) de 10 à 35 % en poids d'éthylène,
c) de 1 à 8 % en poids d'un agent d'auto-réticulation à insaturation éthylénique, et
d) jusqu'à 5 % en poids, de préférence jusqu'à 2,5 % en poids de monomères à insaturation éthylénique qui sont différents des monomères a) à c)
dans lequel le poids est basé sur le poids total des monomères dans le mélange de monomères.

3. Produit fibreux selon la revendication 1, dans lequel ledit mélange de monomères comprend
a) de 65 à 80 % en poids d'acétate de vinyle,
b) de 15 à 30 % en poids d'éthylène,
c) de 2 à 6 % en poids d'un agent d'auto-réticulation à insaturation éthylénique, et
d) jusqu'à 0,5 % en poids de monomères à insaturation éthylénique qui sont différents des monomères a) à c) dans lequel le poids est basé sur le poids total des monomères dans le mélange de monomères.

4. Produit fibreux selon la revendication 1, dans lequel ledit mélange de monomères comprend
a) de 70 à 75 % en poids d'acétate de vinyle,
b) de 20 à 25 % en poids d'éthylène,
c) de 3 à 6 % en poids d'un agent d'auto-réticulation à insaturation éthylénique, et
d) jusqu'à 0,5 % en poids de monomères à insaturation éthylénique qui sont différents des monomères a) à c) dans lequel le poids est basé sur le poids total des monomères dans le mélange de monomères.

5. Produit fibreux selon au moins l'une des revendications 1 à 4, dans lequel le polymère (A) a une température de transition vitreuse (Tg) inférieure à 25 °C, de préférence inférieure à 10 °C, plus préférablement inférieure à 0 °C et tout particulièrement comprise dans la plage allant de -20 °C à -5 °C.

6. Produit fibreux selon au moins l'une des revendications 1 à 5, dans lequel l'agent d'auto-réticulation à insaturation éthylénique (monomère c)) est au moins choisi dans le groupe constitué par l'acide acrylamidoglycolique (AGA), l'éther méthylique de méthylacrylamidoglycolate, le N-méthylolacrylamide (NMA), le N-méthylolméthacrylamide (NMMA), l'allyl-N-méthylolcarbamate, l'éther alkylique de N-méthylolacrylamide, de N-méthylolméthacrylamide et d'allyl-N-méthylolcarbamate, l'ester de N-méthylolacrylamide, de N-méthylolméthacrylamide et d'allyl-N-méthylolcarbamate.

7. Produit fibreux selon au moins l'une des revendications 1 à 6, dans lequel l'agent d'auto-réticulation à insaturation éthylénique (monomère c)) est le N-méthylolacrylamide (NMA) et/ou le N-méthylolméthacrylamide (NMMA).

8. Produit fibreux selon au moins l'une des revendications 1 à 7, dans lequel le monomère d) est un monomère à insaturation éthylénique qui comporte au moins un groupe acide et/ou sel d'acide, de préférence choisi dans le groupe constitué par l'acide carboxylique, l'acide sulfonique, l'acide phosphorique, l'acide phosphonique et leurs sels de métaux alcalins ou leurs sels d'ammonium.

9. Produit fibreux comprenant un canevas de fibres de verre et un système liant comprenant
i) une solution aqueuse telle que définie dans au moins l'une des revendications 1 à 8 et
ii) une formulation aqueuse comprenant le polymère (B) qui est un polymère ayant une température de transition vitreuse (Tg) comprise dans la plage allant de 10 à 50 °C, déterminée selon la norme ASTME 1356.

10. Produit fibreux selon la revendication 9, dans lequel le rapport en poids du polymère (A) au polymère (B) est compris dans la plage allant de 1:99 à 99:1, de préférence de 8:2 à 2:8, plus préférablement de 6:4 à 4:6 et de manière préférée de 5,5:4,5 à 4,5:5,5.

11. Produit fibreux selon au moins l'une des revendications 1 à 10, dans lequel la formulation aqueuse ou le système liant est appliqué sur le canevas de fibres de verre et ensuite durci, de préférence durci thermiquement, plus préférablement durci à une température supérieure à 110 °C, encore plus préférablement durci à une température supérieure à 140 C et en particulier à une température comprise dans la plage allant de 150 à 250 °C.

12. Produit fibreux selon au moins l'une des revendications 1 à 11, dans lequel le canevas de fibres de verre comprend des fils transversaux et des fils longitudinaux qui sont liés en leurs points d'intersection.

13. Produit fibreux selon au moins l'une des revendications 1 à 12, dans lequel le canevas de fibres de verre comprend moins de 155 000 ouvertures de maille par mètre carré et les fils individuels utilisés pour former le canevas ont une taille comprise dans la plage allant de 1800 m/kg à 18 000 m/kg.

14. Utilisation d'une formulation aqueuse comprenant un polymère (A) qui peut être obtenu par polymérisation d'un mélange de monomères comprenant
a) de 55 à 90 % en poids d'acétate de vinyle,
b) de 5 à 40 % en poids d'éthylène,
c) de 0,5 à 10 % en poids d'un agent d'auto-réticulation à insaturation éthylénique, et
d) jusqu'à 10 % en poids de monomères à insaturation éthylénique qui sont différents des monomères a) à c),
par polymérisation radicalaire en émulsion et
dans laquelle le poids est basé sur le poids total des monomères dans le mélange de monomères,
pour le revêtement d'un canevas de fibres de verre ou dans un procédé de fabrication d'un canevas de fibres de verre résistant aux alcalis.

15. Utilisation d'un système liant tel que défini selon la revendication 9, pour le revêtement d'un canevas de fibres de verre ou pour l'augmentation de la résistance aux alcalis des canevas de fibres de verre ou dans un procédé destiné à la fabrication d'un canevas de fibres de verre résistant aux alcalis.
